# EUROPEAN PATENT SPECIFICATION

(11) **EP 2 154 781 B1**
(45) Date of publication and mention of the grant of the patent: **11.08.2010**
(21) Application number: 08105016.3
(22) Date of filing: 11.08.2008
(51) Int. Cl.: H02P 9/06, H02J 7/14, H02K 49/10

(54) **Equipment of power generator**
Ausstattung für Stromgenerator
Equipement de générateur de puissance

(43) Date of publication of application: 17.02.2010
(73) Proprietor: Chang, Chia-Cheng, 220 Banciao City, Taipei County (TW)
(72) Inventor: Chang, Chia-Cheng, 220 Banciao City, Taipei County (TW)
(74) Representative: Lippert, Stachow & Partner

(56) References cited:
- EP-A- 1 111 767
- DE-A1- 2 106 183
- DE-B- 1 274 728
- FR-A- 2 525 038
- FR-A- 2 554 651

## Description

### TECHNICAL FIELD OF THE INVENTION

The present invention relates to an "equipment of power generator", particularly for one that can be effectively kept in continually operation to produce electrical energy by means of the contrivance of a pair of repulsive magnetic objects such that both of which face each other in eccentric manner.

### BACKGROUND OF THE INVENTION

In daily life, people constantly consume various kinds of energy resources all the time for examples taking bus or train can consume the petrochemical or electric energy, using air conditioner for regulating the temperature needs electrical power supply, taking a shower needs coal gas or electricity to water heater too. So, how to effectively use limited energy resources becomes a critical issue to be overcome and solved now. However, following the gradual deficient with global resource in addition to the increasing global warming issue, how to create substituting energy through other resource for replacing present limited electric power generated by thermal power, nuclear energy generating electricity and the like has already become the vital problem to be urgently overcome presently. In order to solve foregoing issues to meet the demand of generating electricity, many ways such as hydroelectric generating and wind-power generating electricity and so on are now employed. Although these hydroelectric generating and wind-power generating electricity can continuously supply the energy undoubtedly, they have a serious intrinsic problem in unstable sources, which are unable to effectively replace current thermal power and nuclear energy generated electricity with possibility in worsening the destruction of the environment and global warming issues incurred. Accordingly, hydroelectric generating and wind-power generating electricity are still served as a complementary power generating way up to now.

Therefore, the power generators described above are not good designs, which need to be improved urgently, as some drawbacks still exist therein. Having realized and addressed the foregoing drawbacks incurred in the conventional power generators, the applicant of the present invention is eager to improve it in innovative way. After having proceeded painstaking research and development for many years, the contrivance of the present invention is successfully worked out eventually.

### SUMMARY OF THE INVENTION

The "equipment of power generator" of the present invention comprises a starting device, a control device, a rotating mechanism, a power generating apparatus and a power storage apparatus, wherein said starting device, which receives the controlling signal from the control device, is connected with rotating mechanism and functioned to initiate the accelerating rotation of the rotating mechanism in the starting stage; Said rotating mechanism includes at least a pair of repulsive magnetic objects, each of which is connected with a distance regulator via a spindle respectively, such that both of which face each other in eccentric manner; When the magnetic objects is initiated to rotate by the starting device, it will keep constant rotation by the repulsive interaction of magnetic poles between the pair of eccentric magnetic objects; If relative rotation speed of the pair of magnetic objects goes too fast or too slow, the distance between both of magnetic objects is adjusted to larger or to smaller for reducing or increasing the magnetic repulsive interaction and relative rotation speed; Thereby, the relative rotation speed of the magnetic objects can be maintained in constantly stable and steady manner to provide the kinetic energy required by the power generating apparatus by means of the reciprocal adjustments of the distance regulator; Said power generating apparatus, which is connected with and directly driven by the rotating mechanism, converts the kinetic energy of the rotating mechanism into electrical energy to be transmitted to and stored in the power storage apparatus; Said power storage apparatus, which is also connected to starting device for supplying the electrical energy required to initiate the rotating mechanism, receives and stores the electrical energy from the power generating apparatus for relaying it to other external equipments; And said control device receives and processes all the feedback signals from the rotating mechanism, power generating apparatus and power storage apparatus into monitoring and controlling information to oversee the integral operational status of the power generator.

Moreover, other than the function to initiate the accelerating rotation of the rotating mechanism in the starting stage, the additional feature of the starting device is capable of supporting the retention of stable and steady relative rotation speed of the magnetic objects while the distance regulator functions as the major role in this coordinating operation due to aging abrasion and natural wearing off of carbon poles of the magnetic objects; Namely, when the relative rotation speed of the magnetic objects goes too slow, the starting device is called for assisting the distance regulator to adjust the distance between both of magnetic objects to smaller for increasing the magnetic repulsive interaction and relative rotation speed while the relative rotation speed of the magnetic objects goes stable normally, the starting device is instructed to stop such assisting function; Thus, the integral operation of the power generator is effectively kept in normal proper condition; For the carbon powder, which is dropped off from the carbon poles of the magnetic objects, can be collected for recycling usage.

The primary object of the present invention is to provide an "equipment of power generator", which can be effectively kept in continually operation to produce electrical energy by means of the repulsive reaction of a pair of same magnetic objects such that both of which face each other in eccentric manner.

The other object of the present invention is to provide an "equipment of power generator" which can be effectively kept in continually stable and steady operation by means of the contrivance of a pair of distance regulator to adjust the distance between both of magnetic objects such that the interactive force between both of magnetic objects can be kept in constant manner.

### BRIEF DESCRIPTION OF THE DRAWINGS

FIG. 1 is the schematic view of block diagram showing the equipment of power generator for the present invention.
FIG. 2 is the planar schematic view of structural drawing showing the rotating mechanism for the equipment of power generator in the present invention.
FIG. 3 is the perspective schematic view of structural drawing showing the rotating mechanism for the equipment of power generator in the present invention.

### DETAILED DESCRIPTION OF THE PREFERRED EMBODIMENTS

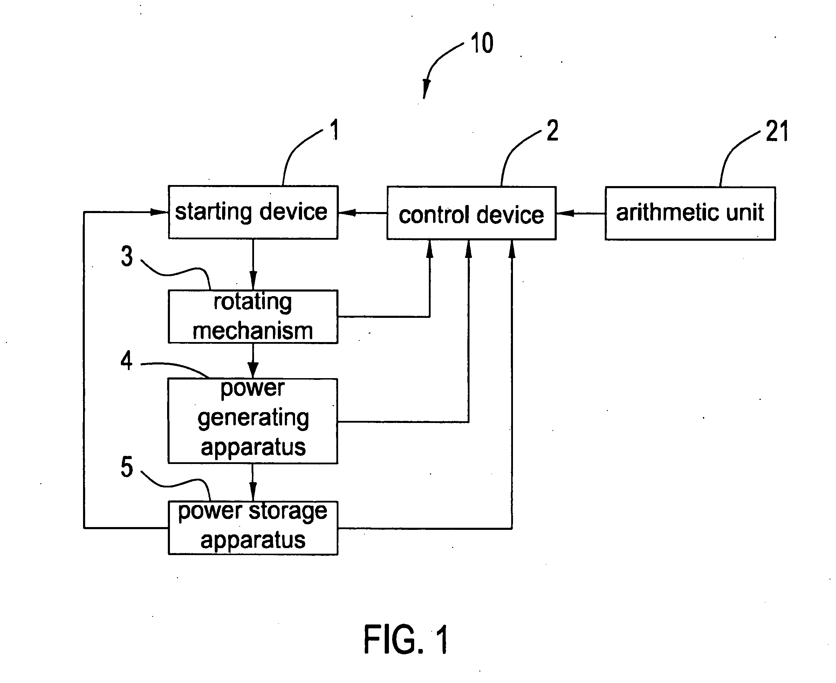

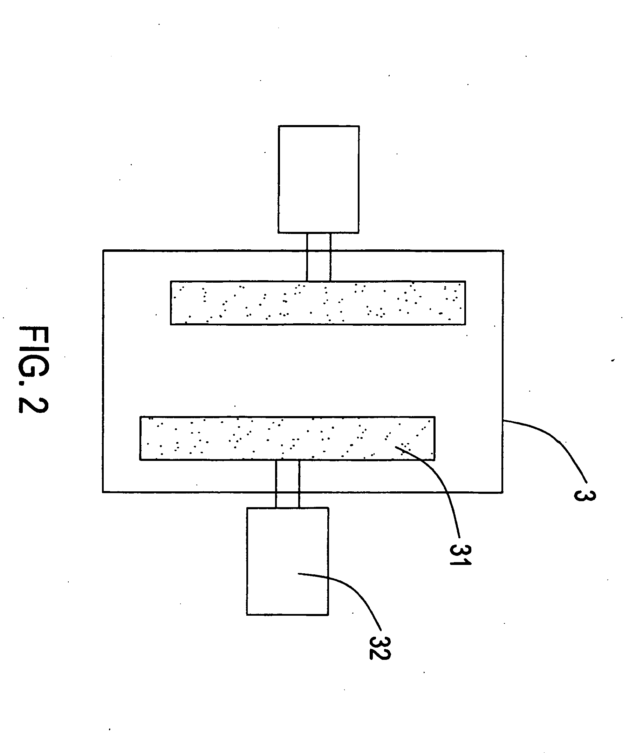

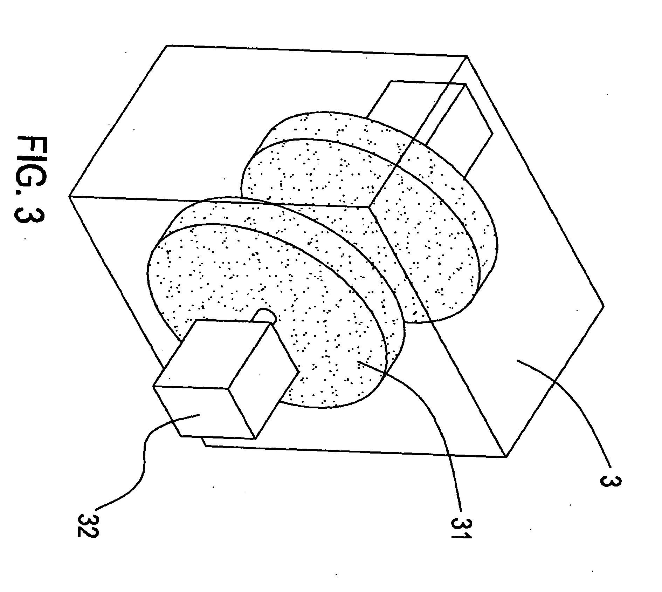

Please refer to FIGS. 1 through 3, which are the block diagram, planar schematic view of structural drawing and perspective schematic view of structural drawing respectively showing the equipment of power generator for the present invention.

The equipment of power generator 10 of the present invention comprises a starting device 1, a control device 2, a rotating mechanism 3, a power generating apparatus 4 and a power storage apparatus 5, wherein:
Said starting device 1, which receives the controlling signal from the control device 2, is connected with rotating mechanism 3 and functioned to initiate the accelerating rotation of the rotating mechanism 3 in the starting stage either by tapping power source form the external power supply or said power storage apparatus 5;
Said rotating mechanism 3 includes at least a pair of repulsive magnet or electromagnet magnetic objects 31, each of which is connected with a distance regulator 32 via a spindle respectively, such that both of which face each other in eccentric manner; When the magnetic objects 31 is initiated to rotate by the starting device 1, it will keep constant rotation by the repulsive interaction of magnetic poles between the pair of eccentric magnetic objects 31; If relative rotation speed of the pair of magnetic objects 31 goes too fast, the distance between both of magnetic objects 31 is adjusted to larger for reducing the magnetic repulsive interaction and relative rotation speed while the relative rotation speed of which goes too slow due to abrasion of the magnetic objects 31, the distance between both of magnetic objects 31 is adjusted to smaller for increasing the magnetic repulsive interaction and relative rotation speed; Thereby, the relative rotation speed of the magnetic objects 31 can be maintained in constantly stable and steady manner to provide the kinetic energy required by the power generating apparatus 4 by means of the reciprocal adjustments of the distance regulator 32;
Said power generating apparatus 4, which is connected with and directly driven by the rotating mechanism 3, converts the kinetic energy of the rotating mechanism 3 into electrical energy to be transmitted to and stored in the power storage apparatus 5; the power generating apparatus 4 can be a motor-generator, namely a motor acting reversibly as generator when being driven by the external kinetic energy;
Said power storage apparatus 5, which is also connected to starting device 1 for supplying the electrical energy required to initiate the rotating mechanism 3, receives and stores the electrical energy from the power generating apparatus 4 for relaying it to other external equipments; the power storage apparatus 5 can be a lithium battery; and
Said control device 2 receives and processes all the feedback signals from the rotating mechanism 3, power generating apparatus 4 and power storage apparatus 5 into monitoring and controlling information to oversee the integral operational status of the power generator 10; a display panel can be additionally disposed thereon to display the relevant information for observation by the user; and an arithmetic unit 21 can also be additionally disposed therewith to compute and convert the relative rotation speed of the magnetic objects 31 in the rotating mechanism 3 into governing signals for supplying to the distance regulator 32 and indirectly regulating the distance between the pair of the magnetic objects 31 to achieve the stable and steady operation of the power generator 10; Thus, through the synergistic structure of all the components, the pollution accrued and energy consumed by the power generator 10 can be effectively reduced without sacrificing the production of the electrical energy thereof.

Moreover, other than the function to initiate the accelerating rotation of the rotating mechanism 3 in the starting stage, the additional feature of the starting device 1 is capable of supporting the retention of stable and steady relative rotation speed of the magnetic objects 31 while the distance regulator 32 functions as the major role in this coordinating operation due to aging abrasion and natural wearing off of carbon poles of the magnetic objects 31; Namely, when the relative rotation speed of the magnetic objects 31 goes too slow, the starting device 1 is called for assisting the distance regulator 32 to adjust the distance between both of magnetic objects 31 to smaller for increasing the magnetic repulsive interaction and relative rotation speed while the relative rotation speed of the magnetic objects 31 goes stable normally, the starting device 1 is instructed to stop such assisting function; Thus, the integral operation of the power generator 10 is effectively kept in normal proper condition.

All the disclosure heretofore is only one of the exemplary preferred embodiments for the present invention, which is defined by the claims.

## Claims

1. An "equipment of power generator" comprises a starting device, a control device, a rotating mechanism, a power generating apparatus and a power storage apparatus, wherein:
Said starting device, which receives the controlling signal from the control device, is connected with rotating mechanism and functioned to initiate the accelerating rotation of the rotating mechanism in the starting stage;
Said power generating apparatus, which is connected with and directly driven by the rotating mechanism, converts the kinetic energy of the rotating mechanism into electrical energy to be transmitted to and stored in the power storage apparatus;
Said power storage apparatus, which is also connected to starting device, receives and stores the electrical energy from the power generating apparatus for relaying it to other external equipments; and
Said control device receives and processes all the feedback signals from the rotating mechanism, power generating apparatus and power storage apparatus into monitoring and controlling information to oversee the integral operational status of the power generator.
**characterised in that** the rotating mechanism includes at least a pair of repulsive magnetic objects in same pole magnetism, each of which is connected with a distance regulator via a spindle respectively, such that both of which face each other in eccentric manner;

2. The "equipment of power generator" is recited and claimed in the claim 1, wherein said magnetic object is magnet.

3. The "equipment of power generator" is recited and claimed in the claim 1, wherein said magnetic object is electromagnet.

4. The power generator equipment is recited and claimed in the claim 1, wherein said power generating apparatus is a motor-generator.

5. The power generator equipment is recited and claimed in the claim 1, wherein said power storage apparatus is a lithium battery.

6. The power generator equipment is recited and claimed in the claim 1, wherein a display panel is additionally disposed on said control device to display the relevant information thereon.

7. The power generator equipment is recited and claimed in the claim 1, wherein an arithmetic unit is further additionally disposed with said control device to compute and convert the relative rotation speed of the magnetic objects in the rotating mechanism into governing signals for supplying to the distance regulator and indirectly regulating the distance between the pair of the magnetic objects to achieve the stable and steady operation of the power generator.

## Patentansprüche

1. Ausstattung für Stromgenerator, umfassend eine Anlassvorrichtung, eine Steuereinrichtung, eine Drehmechanik, einen Stromerzeuger und einen Energiespeicher, wobei
- die Anlassvorrichtung, welche von der Steuereinrichtung ein Steuersignal erhält, mit der Drehmechanik verbunden ist und im Anlassstadium veranlasst wird, die beschleunigte Drehung der Drehmechanik einzuleiten;
- der Stromerzeuger, der mit der Drehmechanik verbunden und von dieser unmittelbar angetrieben wird, die kinetische Energie der Drehmechanik in elektrische Energie umwandelt, welche zum Energiespeicher übertragen und in diesem gespeichert wird;
- der Energiespeicher, der auch mit der Anlassvorrichtung verbunden ist, die elektrische Energie vom Stromerzeuger erhält und speichert, um sie an andere externe Geräte weiterzugeben und
- die Steuereinrichtung alle Rückmeldungen von der Drehmechanik, dem Stromerzeuger und dem Energiespeicher empfängt und zu Überwachungs- und Steuerinformation verarbeitet, um den gesamten Betriebszustand des Stromerzeugers zu überwachen,
- **dadurch gekennzeichnet, dass** die Drehmechanik zumindest zwei sich abstoßende magnetische Objekte in gleichpoliger Magnetisierung umfasst, von denen jeder über eine Welle mit einem Abstandsregler verbunden ist, sodass sich beide auf exzentrische Weise gegenüberstehen.

2. Ausstattung für Stromgenerator nach Anspruch 1, wobei das magnetische Objekt ein Magnet ist.

3. Ausstattung für Stromgenerator nach Anspruch 1, wobei das magnetische Objekt ein Elektromagnet ist.

4. Ausstattung für Stromgenerator nach Anspruch 1, wobei der Stromerzeuger ein Motor-Generator ist.

5. Ausstattung für Stromgenerator nach Anspruch 1, wobei der Energiespeicher eine Lithiumbatterie ist.

6. Ausstattung für Stromgenerator nach Anspruch 1, wobei auf der Steuereinrichtung zusätzlich eine Anzeigevorrichtung angebracht ist, um auf dieser die relevante Information anzuzeigen.

7. Ausstattung für Stromgenerator nach Anspruch 1, wobei ferner mit der Steuereinrichtung zusätzlich ein Rechenwerk angeordnet ist, um die relative Drehgeschwindigkeit der magnetischen Objekte in der Drehmechanik in Steuersignale umzurechnen und umzuwandeln, die an den Abstandsregler abgegeben werden, und um indirekt den Abstand zwischen den beiden magnetischen Objekten zu regeln, um einen stabilen und konstanten Betrieb des Stromerzeugers zu erzielen.

## Revendications

1. "Equipement de générateur de puissance", comprenant un dispositif de démarrage, un dispositif de commande, un mécanisme rotatif, un dispositif de génération d'énergie et un dispositif de stockage d'énergie, dans lequel :
ledit dispositif de démarrage, qui reçoit le signal de commande provenant du dispositif de commande, est connecté au mécanisme de rotation et fonctionne pour initier la rotation d'accélération du mécanisme rotatif au stade du démarrage ;
ledit dispositif de génération d'énergie, connecté au et directement entraîné par le mécanisme rotatif, convertit l'énergie cinétique du mécanisme rotatif en énergie électrique à transmettre au dispositif de stockage d'énergie et stockée dans celui-ci ;
ledit dispositif de stockage d'énergie, également connecté au dispositif de démarrage, reçoit et stocke l'énergie électrique provenant du dispositif de génération d'énergie, pour la relayer à d'autres équipements externes ; et
ledit dispositif de commande reçoit et traite la totalité des signaux de rétroaction provenant du mécanisme rotatif, du dispositif de génération d'énergie et du dispositif de stockage d'énergie, en une information de surveillance et de commande, pour superviser l'état opérationnel global du générateur d'énergie,
**caractérisé en ce que** le mécanisme rotatif comprend au moins une paire d'objets magnétiques à répulsion, situés dans le même magnétisme polaire, dont chacun est connecté à un régulateur de distance, via une broche, respectivement, de manière que les deux soient placés en regard l'un de l'autre de manière excentrique.

2. Equipement de générateur de puissance selon la revendication 1, dans lequel ledit objet magnétique est un aimant.

3. Equipement de générateur de puissance selon la revendication 1, dans lequel ledit objet magnétique est un électroaimant.

4. Equipement de générateur de puissance selon la revendication 1, dans lequel ledit dispositif de génération d'énergie est un moteur-générateur.

5. Equipement de générateur de puissance selon la revendication 1, dans lequel ledit dispositif de stockage d'énergie est une batterie au lithium.

6. Equipement de générateur de puissance selon la revendication 1, dans lequel un panneau d'affichage est disposé à titre additionnel sur ledit dispositif de commande, de manière à afficher sur lui l'information présentant un intérêt.

7. Equipement de générateur de puissance selon la revendication 1, dans lequel une unité arithmétique est en outre disposée, à titre additionnel audit dispositif de commande, de manière à calculer et convertir la vitesse de rotation relative des objets magnétiques situés dans le mécanisme rotatif en des signaux de régulation à fournir au régulateur de distance et pour, indirectement, réguler la distance entre la paire d'objets magnétiques, pour obtenir un fonctionnement stable et continu du générateur d'énergie.
